# EUROPÄISCHE PATENTSCHRIFT

(11) **EP 2 556 282 B1**
(45) Veröffentlichungstag und Bekanntmachung des Hinweises auf die Patenterteilung: **12.11.2014**
(21) Anmeldenummer: 11713698.6
(22) Anmeldetag: 07.04.2011
(51) Int. Cl.: F16K 99/00

(54) **MIKROVENTIL MIT ELASTISCH VERFORMBARER VENTILLIPPE, HERSTELLUNGSVERFAHREN UND MIKROPUMPE**
MICRO VALVE WITH ELASTIC DEFORMABLE SEAL LIP, METHOD OF PRODUCING AND MICRROPUMP
MICRO-SOUPAPE, METHODE DE PRODUCTION ET MICRO-POMPE

(30) Priorität: 30.07.2010 DE 102010032799; 09.04.2010 DE 102010014308
(43) Veröffentlichungstag der Anmeldung: 13.02.2013
(73) Patentinhaber: Albert-Ludwigs-Universität Freiburg, 79085 Freiburg (DE)
(72) Erfinder: LEMKE, Thomas, 8400 Winterthur (DE); KLÖKER, Jens, 79853 Lenzkirch (DE); GOLDSCHMIDTBÖING, Frank, 79183 Waldkirch (DE); WOIAS, Peter, 79102 Freiburg (DE)
(74) Vertreter: Grünecker, Kinkeldey, Stockmair & Schwanhäusser
(86) Internationale Anmeldenummer: PCT/EP2011/001743
(87) Internationale Veröffentlichungsnummer: WO 2011/124384

(56) Entgegenhaltungen:
- WO-A1-91/02169
- CH-A5- 683 793
- DE-A1- 19 637 928
- DE-A1-102004 018 807
- US-A- 5 333 831
- US-B1- 6 736 370
- MASAYOSHI ESASHI ET AL: "NORMALLY CLOSED MICROVALVE AND MICROPUMP FABRICATED ON A SILICON WAFER", SENSORS AND ACTUATORS, ELSEVIER SEQUOIA S.A. LAUSANNE, CH, vol. 20, no. 1 / 02, 15 November 1989 (1989-11-15), pages 163-169, XP000135240, DOI: 10.1016/0250-6874(89)87114-8

## Beschreibung

Die vorliegende Erfindung bezieht sich auf ein Mikroventil, das aus zwei fest verbundenen Substraten gebildet ist und vorzugsweise ein z. B. membrangetriebenes Aktorelement zum gesteuerten Öffnen und Schließen eines ersten und/oder zweiten Durchlasses aufweist. Weiterhin bezieht sich die vorliegende Erfindung auf ein Herstellungsverfahren für ein solches Mikroventil sowie auf eine Mikropumpe, die mindestens ein derartiges Mikroventil verwendet. Diese Mikropumpe soll insbesondere im Zusammenhang mit der Entwicklung eines hydraulischen Muskels (beispielsweise Schließmuskels) zur Behandlung der Harn-, Fäkalinkontinenz oder erektilen Dysfunktion Verwendung finden.

Während der letzten 20 Jahre wurden auf dem Gebiet der Mikrofluidik eine Vielzahl unterschiedlicher Mikroventiltypen entwickelt, wie dies beispielsweise aus dem Übersichtsartikel Oh, K. W. et al.: "A review of micro valves", Journal of Micromechanics and Microengineering, 16(2006), R13 - R39, hervorgeht. Generell können Mikroventile in aktive und passive Ventile unterteilt werden, wobei ein passives Ventil unidirektional ist, da der Zustand des passiven Ventils von der anliegenden Druckdifferenz abhängt. Ist der Druck am Ausgang höher als am Eingang, so sperrt ein passives Ventil. Ist der Druck am Ausgang niedriger als am Eingang, so erlaubt das Ventil einen Durchfluss. Eine alternative Ausführungsform sind sogenannte Düse-Diffuserventile, welche in Durchlassrichtung einen wesentlich größeren Durchfluss als in Sperrrichtung aufweisen. Aktive Ventile können dagegen unabhängig von Eingangs- und Ausgangsdruck geöffnet und geschlossen werden. Dies geschieht in der Regel mittels einer elektronischen Ansteuerung, beispielsweise über piezoelektrische oder elektromagnetische Antriebe. Bei aktiven Ventilen besteht grundsätzlich die Möglichkeit, in beide Richtungen einen Durchfluss zu ermöglichen. Durch diese Bidirektionalität sind Eingang und Ausgang nicht mehr statisch definiert, sondern hängen vom Betriebszustand des Ventils ab.

Bei vielen aktiven Ventilen wird eine Membran ausgelenkt, um das Ventil zu öffnen oder zu schließen. Dabei kommen eine Vielzahl von Aktuierungsprinzipien zum Einsatz. Weiterhin kann man bei aktiven Ventilen zwischen normal-geöffneten, normal-geschlossenen und bistabilen Ventilen unterscheiden. Bistabile Ventile sind solche Ventile, die zwei stabile Zustände aufweisen und die Eigenschaften normal-geöffneter und normal-geschlossener Ventile vereinen.

Mikroventile können in einer Vielzahl von verschiedenen Anwendungen, wie beispielsweise der Mikrodosierung, Medikamentenfreisetzung, Bioanalytik oder in sogenannten "Micro total analysis systems" (µTAS), die alle zur chemischen Analyse einer Substanz nötigen Schritte automatisiert durchführen, angewendet werden.

Die vorliegende Erfindung ist grundsätzlich weder auf den Ventiltyp noch auf die Anwendung beschränkt, soll aber nachfolgend beispielhaft für ein normal-geschlossenes aktives Ventil gezeigt werden, wie es für ein sogenanntes "artificial sphincter system", eine medizinische Schließmuskelprothese, anwendbar ist. Bekannte Mikroventile und Mikropumpen, wie sie beispielsweise aus der DE 10 2005 038 483 B3 hervorgehen, besitzen zwei zusammengefügte Substrate mit entsprechenden Durchlassöffnungen und Ventillippen, welche die Durchlassöffnungen umgeben und durch die Betätigung des Membranbereichs zum Schließen der Öffnungen dienen, welche durch mikromechanische Ätztechniken als Vorsprünge aus dem Substratmaterial herausgearbeitet sind. Es hat sich jedoch gezeigt, dass bei derartigen Mikroventilen das wiederholte Auftreffen der Membran auf den vergleichbar harten Ventilsitz zu einer dauerhaften Schädigung des Ventilsitzes führen kann. Dies verursacht im Laufe der Zeit durch abnehmende Dichtigkeit den irreparablen Ausfall des Systems. Insbesondere für implantierbare Mikrosysteme, wie die Schließmuskelprothese, ist aber eine möglichst lange wartungsfreie Betriebszeit essentiell.

Die DE 196 37 928 A1 bezieht sich auf eine Membran-Aktuierungseinrichtung für Mikropumpen, Mikroschalter oder Mikroventile mit zwei gegenläufig ausgelenkten Schaltbereichen. Diese Schaltbereiche werden durch dünne Membranen, beispielsweise aus Silizium, gebildet. Der Ventilsitz, der durch einen der beiden Membranbereiche gedichtet wird, besteht ebenfalls aus einem Siliziumchip. Insbesondere besitzt die in dieser Druckschrift offenbarte bistabile Mikroaktivierungsvorrichtung eine weitgehend flexible, aber durch innere mechanische Spannungen vorgeformte Gesamtmembran, die einen Fluidpfad zwischen den Siliziumchips 8 und 9 freigibt oder versperrt.

Die US 6,736,370 B1 bezieht sich auf ein integriertes Fluidsteuerventil, das Prozessflüssigkeiten im Zusammenhang mit einer Halbleiterfertigung handhabt. In einem benetzten Bereich des Ventils treten Prozessfluide durch eine oder mehrere Eintrittsöffnungen ein und treten durch einen ringförmigen metallischen Ventilsitz wieder aus. In dem Antriebsbereich des Ventils ist ein gleitender Zylinder vorgesehen, der ein oberes und ein unteres horizontales Element besitzt und der sich von oben nach unten bewegt. Das untere horizontale Element presst eine Membran gegen den Ventilsitz, um das Ventil zu schließen und bewegt sich von dem Ventilsitz weg, um einen Fluidfluss durch das Ventil zu ermöglichen. Eine Feder presst sich auf das obere horizontale Element des Zylinders während ein gesteuerter pneumatischer Druck am Boden des unteren horizontalen Elements ausgeübt wird. Das Gleichgewicht zwischen der Federkraft und der Kraft des pneumatischen Drucks bestimmt das Ausmaß der Öffnung des Ventils.

Aus dem Artikel Masayoshi Esashi et al.; "Normally Closed Microvalve and Micropump Fabricated on a Silicon Wafer"; Sensors and Actuators, 20, 1989, S. 163 - 169, ist ein normal geschlossenes Mikroventil und eine Mikropumpe bekannt, die aus einem Silizium-Wafer mittels Mikrotechnik hergestellt ist. Eine bewegliche Siliziummembran mit einem Piezoaktor bewegt einen Ventilsitz, der gegen eine Glasstruktur gepresst wird. Der Ventilsitz ist gemäß den Ausführungen bezüglich der Herstellung dieser Mikrostrukturen aus Silizium mit einer einen Mikrometer dicken Siliziumoxid-Schicht.

Die vorliegende Erfindung basiert daher auf der Idee, bei einem mit mikrosystemtechnischen Verfahren hergestellten Ventil zum Abdichten mindestens einer der Durchlassöffnungen eine elastisch verformbare Ventillippe vorzusehen. Mit einer derartigen elastisch verformbaren Ventillippe kann zum einen einem übermäßigen Verschleiß der Materialien im Betrieb vorgebeugt werden und zum anderen kann durch Ausgleich von Substratunebenheiten oder flexibles Anpassen an Strukturierungstoleranzen eine wesentlich verbesserte Dichtigkeit des Ventils im geschlossenen Zustand erzeugt werden.

Als Material für eine solche Ventillippe kommt in vorteilhafter Weise ein Polymer in Frage, das ein E-Modul von höchstens circa 500 MPa hat, um eine ausreichende Verformbarkeit und Dämpfung sicherzustellen. Die Ventillippe wird einstückig aus diesem Polymermaterial gefertigt, erfindungsgemäß in einem einzigen Photolithographieschritt. Obwohl auch andere Materialien mit der geforderten Elastizität verwendet werden können, stellt ein direkt photostrukturierbares Silikon mit einem E-Modul von etwa 160 MPa ein gut geeignetes Dichtmaterial dar.

Gemäß einer vorteilhaften Ausführungsform steht die Ventillippe in einer geschlossenen Position unter mechanischer Vorspannung. Durch den hierdurch erzeugten Anpressdruck und die daraus entstehenden elastischen Verformung der Dichtlippe kann eine besonders sichere Abdichtung gewährleistet werden.

Gemäß einer vorteilhaften Ausführungsform ist das erfindungsgemäße Mikroventil ein aktives Ventil und weist mindestens ein Aktorelement zum gesteuerten Öffnen und Schließen des ersten und/oder zweiten Durchlasses auf. Solche aktiven Ventile bieten, wie bereits erwähnt, den Vorteil, dass sie bidirektional sind und beispielsweise zur Realisierung einer bidirektionalen Mikropumpe verwendet werden können. Für einen Fachmann ist aber selbstverständlich klar, dass die erfindungsgemäßen Prinzipien für ein passives Ventil ebenfalls anwendbar sind.

Für verschiedene Anwendungen ist es erforderlich, dass ein Mikroventil ohne Aufwendung von Energie im geschlossenen Zustand verbleibt und nur zum Öffnen aktuiert werden muss. Solche normal-geschlossenen Ventile sind z. B. für die bereits erwähnte Schließmuskelprothese erforderlich. Daher ist gemäß einer vorteilhaften Weiterbildung des erfindungsgemäßen Mikroventils das Aktorelement zum Öffnen des ersten und/oder zweiten Durchlasses betätigbar, so dass ein normal-geschlossenes Mikroventil gebildet werden kann. Hierdurch wird in vorteilhafter Weise der Energieverbrauch für alle die Anwendungen signifikant reduziert, bei denen der überwiegende Teil der Betriebsdauer einen geschlossenen Zustand des Ventils erfordert.

Gemäß der vorliegenden Erfindung wird die Ventillippe in einem planartechnischen Fertigungsschritt auf dem ersten und/oder dem zweiten Substrat ausgebildet. Diese Lösung erlaubt eine besonders kostengünstige Fertigung, da planartechnische Schritte als Teil des mikromechanischen Herstellungsprozesses vorgesehen werden können und Scheibenfertigung und Batchprozesse erlauben. Insbesondere wenn die Ventillippe durch eine photolithographisch strukturierte Silikonschicht gebildet wird, kann eine besonders exakte und definierte Formgebung der dichtenden Ventillippe erreicht werden.

Beispielsweise kann die Ventillippe einteilig so geformt sein, dass sie die jeweilige Durchlassöffnung umlaufend dichtend abschließt. Dies erlaubt eine besonders sichere und langzeitstabile Dichtung des Ventils im geschlossenen Zustand. Gleichzeitig kann auch gegen hohe Gegendrücke gedichtet werden.

In der Draufsicht kann die Ventillippe die verschiedensten Geometrien aufweisen. So wurden intensive Untersuchungen und positive Resultate für ringförmige Ventillippen durchgeführt. Selbstverständlich kann aber auch jede andere Grundfläche, beispielsweise eine rechteckige oder polygonale Struktur ebenso wie ovale und sonstige längliche Querschnitte gewählt werden.

Gemäß einer alternativen Ausführungsform ist die Ventillippe mehrteilig ausgebildet. Es können beispielsweise eine Vielzahl säulenartiger versetzt angeordneter Dichtelemente vorgesehen sein. Diese bilden im mechanisch unbelasteten Zustand Durchlasspfade mit geringem fluidischen Widerstand aus und versperren im mechanisch belasteten Zustand den Fluidpfad durch stark erhöhten fluidischen Widerstand. Auf diese Weise kann beispielsweise auch eine verzahnte Struktur erreicht werden, indem ein Teil der Dichtelemente auf einem Substrat und ein weiterer Teil auf dem gegenüberliegenden Substrat angeordnet wird. Das Zusammenwirken von Dichtelementen auf zwei Substratseiten kann aber selbstverständlich auch im Fall umlaufender Dichtungen eingesetzt werden.

Der Vorteil einer solchen kombinierten Ausgestaltung ist die Möglichkeit, auf Fertigungstoleranzen flexibler zu reagieren und im Falle von beidseitig aufgebrachten Dichtungen die Möglichkeit, eine verbesserte Abdichtung durch das Zusammenwirken zweier elastisch verformbarer Elemente zu erreichen.

Die vorteilhaften Eigenschaften der erfindungsgemäßen Mikroventilstruktur kommen besonders zum Tragen, wenn das Mikroventil mittels einer piezoelektrisch oder elektromagnetisch aktuierbaren auslenkbaren Membran zum Öffnen und Schließen des ersten und/oder zweiten Durchlasses ausgerüstet ist. Eine solche Membranstruktur lässt sich besonders einfach in den planartechnischen Fertigungsprozess integrieren und die benötigen Hübe lassen sich auf diese Weise gut erreichen.

Insbesondere Mikropumpen, die eine hohe Gegendruckstabilität, geringe Leckrate und hohe Energieeffizienz bei gleichzeitig geringer Baugröße aufweisen, können unter Verwendung des erfindungsgemäßen Mikroventils entworfen werden.

Dabei kann diese Pumpe eines oder mehrere der Mikroventile beinhalten, wie dies in der DE 10 2005 038 483 B3 beispielhaft für eine Zweikammermikropumpe gezeigt ist. Insbesondere bei der Anwendung für ein künstliches Schließmuskelsystem ist die erfindungsgemäße Mikropumpe vorteilhaft. Dabei handelt es sich um eine medizinische Schließmuskelprothese, deren Kernelement eine peristaltische Mikropumpe ist. Diese Pumpe pumpt ein flüssiges Medium vom sogenannten Reservoir in einen Kompressionsblähkörper oder umgekehrt.

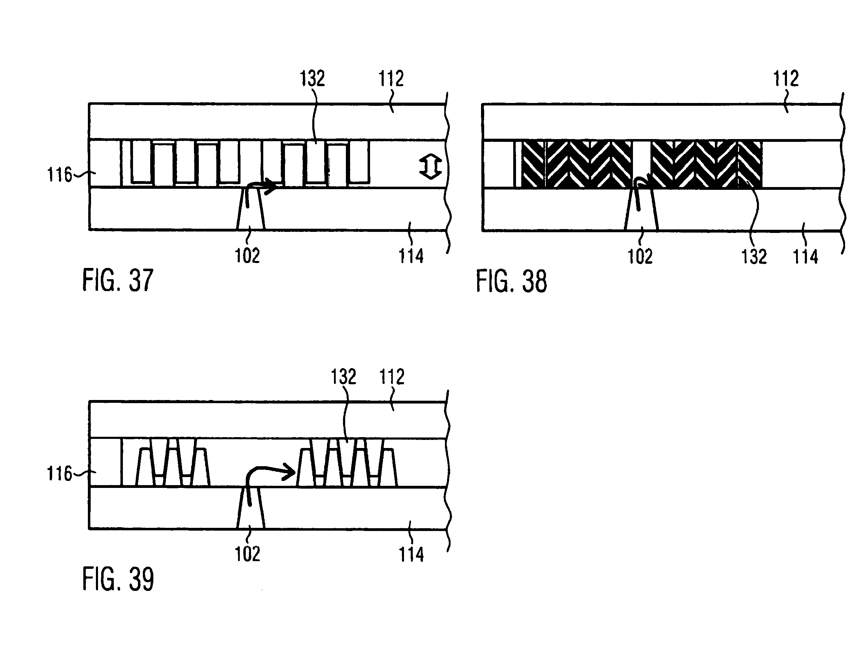

Bei diesem z. B. aus der DE 102004018807 B4 bekannten und im Folgenden als GASS (German Artificial Sphincter System) bezeichneten System werden zwei stabile Zustände unterschieden, die schematisch in den Abbildungen 37 und 38 dargestellt sind. Im Defäkationszustand befindet sich der Großteil des Flüssigkeitsvolumens im Reservoir, wohingegen im Kontinenzzustand die Kompressionsblähkörper, welche den Enddarm verschließen, mit der Flüssigkeit gefüllt sind. In diesen beiden Zuständen sind die Ventile des Systems geschlossen, sodass kein Flüssigkeitstransfer zwischen dem Blähkörper und dem Reservoir stattfinden kann. Ein durch die Pumpe aufgebauter Druck wird im Kontinenzzustand aufrecht gehalten, während im Defäkationszustand der Rückfluss der Flüssigkeit in den Kompressionsblähkörper vermieden wird. Mit Hilfe des erfindungsgemäßen Ventils kann zum einen ein normal-geschlossenes System realisiert werden, bei dem nur während der Zeiten, in denen der Übergang von einem auf den anderen Zustand erfolgt, Energie aufgewendet werden muss, während zum Aufrechterhalten des jeweils eingestellten Endzustands keine Energie mehr erforderlich ist. Weiterhin verhindern die guten Dichteigenschaften der erfindungsgemäßen Ventilanordnung unerwünschtes Übertreten der Flüssigkeit vom Kompressionsblähkörper in das Reservoir und umgekehrt und damit unerwünschte Druckverluste.

Weiterhin ist speziell bei implantierten Systemen eine lange Lebensdauer erwünscht und das erfindungsgemäße Ventil besitzt eine wesentlich längere Standzeit, da beim Schließen kein hart/harter Aufprall von funktionalen Siliziumstrukturen stattfindet, wie dies bei dem bekannten Ventil aus der DE 10 2005 038 483 B3 der Fall ist.

Gemäß einer vorteilhaften Ausführungsform der vorliegenden Erfindung wird beim Zusammenfügen des ersten und zweiten Substrats mechanischer Druck auf die Ventillippe ausgeübt, so dass diese im geschlossenen Zustand verformt ist. Dieses Anpressen erlaubt die Herstellung eines besonders dichten normal-geschlossenen Ventils.

Um einen definierten Anpressdruck bei der Fertigung zu gewährleisten, können grundsätzlich zwei unterschiedliche Ansätze verfolgt werden: Zum einen kann die feste Verbindung zwischen den beiden Substraten durch eine adhäsive Bondschicht erfolgen. In diesem Fall lässt sich über die Höhe der Bondschicht und die Höhe der Dichtstruktur der Grad der Verformung, der sich in geschlossener Position einstellt, festlegen. Alternativ können die beiden Substrate aber auch durch Direktbondverfahren mit geeignetem Temperaturbudget aneinander gefügt werden. In diesem Fall kann durch eine definierte Ätzgrube oder definierte Ätzung zur Herstellung einer Kavität mit definierter Tiefe etc. an einer oder beiden Substratoberflächen der Grad der Verformung der Ventillippe im geschlossenen Zustand eingestellt werden.

Grundsätzlich ist die Verwendung von Aktoren mit großer Kraft und großem Stellweg vorteilhaft. Besonders geeignet und auch gut untersucht ist hier ein piezoelektrischer Biegewandler. Es sind jedoch auch andere Antriebsprinzipien denkbar, beispielsweise unter Verwendung von Druckluft oder elektrostatischen oder elektromagnetischen Aktorprinzipien. Jede andere Antriebsform, bei der eine flexible Membran zum Öffnen und Schließen des Ventils bewegbar ist, ist selbstverständlich für das erfindungsgemäße Mikroventil ebenfalls einsetzbar.

Weiterhin kann für verschiedene Anwendungen erforderlich sein, das erfindungsgemäße Mikroventil auch mit chemisch aggressiven oder biologisch kontaminierten Medien zu betreiben. Insbesondere kann auch das Bedürfnis nach einer Dekontamination oder Sterilisation durch entsprechend aggressive chemische Agenzien bestehen. In diesen Fällen kann das Problem auftreten, dass die Verbindungsbereiche zwischen dem ersten und zweiten Substrat und insbesondere die Bondschicht durch die eingefüllten Medien angegriffen werden. Im schlimmsten Fall verursacht ein solcher chemischer Angriff auf die Bondschicht den Ausfall des Bauteils.

In einer vorteilhaften Weiterbildung der vorliegenden Erfindung ist daher vorgesehen, dass alternativ oder zusätzlich zu dem elastischen Abdichten des ersten und/oder zweiten Durchlasses mindestens eine weitere elastisch verformbare Dichtstruktur an den Randbereichen der Ventilkammer und/oder an den Randbereichen des Bauelements nach außen angeordnet ist, durch welche insbesondere die Bondschicht vor den geförderten Medien geschützt werden kann.

Gemäß der vorliegenden Erfindung wird eine solche versiegelnde Dichtstruktur umlaufend, geschlossen, flexibel und deformierbar ausgeführt und ist beispielsweise aus einem photostrukturierbaren Silikon hergestellt. Eine solche versiegelnde Dichtstruktur sorgt für die chemische Resistenz beispielsweise gegenüber Ätzmedien, die durch das Mikroventil oder die Mikropumpe transportiert werden und verbessert außerdem die Einsetzbarkeit für biologische Anwendungen.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einzelne Merkmale oder Merkmalskombinationen aus den gezeigten und beschriebenen Ausführungsformen für sich genommen eigenständige erfinderische oder erfindungsgemäße Lösungen darstellen.

Es zeigen:
- **Fig. 1**: eine perspektivische Ansicht eines Mikroventils in geschlossenem Zustand;
- **Fig. 2**: eine perspektivische Ansicht des Mikroventils aus Figur 1 im offenen Zustand;
- **Fig. 3**: eine Detailansicht des Ventils aus Figur 1;
- **Fig. 4**: eine Detailansicht des Ventils aus Figur 2;
- **Fig. 5**: ein Mikroventil gemäß einer weiteren Ausführungsform im geschlossenen Zustand;
- **Fig. 6**: eine perspektivische Ansicht des Ventils aus Figur 5 im geöffneten Zustand;
- **Fig. 7**: ein erstes Substrat im Ausgangszustand;
- **Fig. 8**: das erste Substrat nach dem Aufwachsen von Feuchtoxid und dem Abscheiden von Siliziumnitrid;
- **Fig. 9**: das erste Substrat nach der Strukturierung eines Photolacks;
- **Fig. 10**: das erste Substrat nach dem Trockenätzen;
- **Fig. 11**: das erste Substrat nach dem Entfernen des Photolacks;
- **Fig. 12**: das erste Substrat nach dem zeitkontrollierten KOH-Nassätzen;
- **Fig. 13**: das erste Substrat nach einem Flusssäureätzschritt;
- **Fig. 14**: das erste Substrat nach dem Aufdampfen einer Metallisierungsschicht;
- **Fig. 15**: das erste Substrat nach der photolithographischen Strukturierung aufgeschleuderten Silikons;
- **Fig. 16**: ein zweites Substrat im Ausgangszustand;
- **Fig. 17**: das zweite Substrat nach dem Aufwachsen von Feuchtoxid und dem Abscheiden von Siliziumnitrid;
- **Fig. 18**: das zweite Substrat nach dem Aufbringen und Strukturieren eines Photolacks;
- **Fig. 19**: das zweite Substrat nach einem Trockenätzschritt;
- **Fig. 20**: das zweite Substrat nach dem Entfernen des Photolacks;
- **Fig. 21**: das zweite Substrat nach dem zeitkontrollierten KOH-Nassätzen;
- **Fig. 22**: das zweite Substrat nach einem Flusssäureätzschritt;
- **Fig. 23**: das zweite Substrat nach dem Auflaminieren einer adhäsiven Bondschicht;
- **Fig. 24**: das zweite Substrat nach der photolithographischen Strukturierung der Bondschicht;
- **Fig. 25**: das erste und zweite Substrat während des Justierschritts;
- **Fig. 26**: das erste und zweite Substrat beim Bonden unter mechanischem Druck;
- **Fig. 27**: die fertiggestellte Mikroventilanordnung nach dem Anbringen eines piezoelektrischen Aktors;
- **Fig. 28**: eine schematische Darstellung einer Mikropumpe mit einem dichtenden Ventil;
- **Fig. 29**: eine schematische Darstellung einer Mikropumpe mit zwei dichtenden Ventilen;
- **Fig. 30**: das erste und zweite Substrat gemäß einer alternativen Ausführungsform während des Justierschritts;
- **Fig. 31**: das erste und zweite Substrat gemäß einer alternativen Ausführungsform beim Bonden unter mechanischem Druck;
- **Fig. 32**: die fertiggestellte Mikroventilanordnung gemäß einer alternativen Ausführungsform nach dem Anbringen eines piezoelektrischen Aktors;
- **Fig. 33**: eine Draufsicht auf eine Durchlassöffnung, die mit einer Vielzahl von Dichtelementen gedichtet ist, im offenen Zustand;
- **Fig. 34**: eine weitere Ausführungsform unter Verwendung einer Vielzahl von Dichtelementen im offenen Zustand;
- **Fig. 35**: die Anordnung der Figur 33 im geschlossenen Zustand;
- **Fig. 36**: die Anordnung der Figur 34 im geschlossenen Zustand;
- **Fig. 37**: ein Querschnitt durch eine Ventilanordnung mit Dichtelementen auf dem ersten und dem zweiten Substrat im geöffneten Zustand;
- **Fig. 38**: die Anordnung der Figur 37 im geschlossenen Zustand;
- **Fig. 39**: eine weitere Ventilanordnung mit einer Vielzahl von Dichtelementen mit abgeschrägten Wandungen;
- **Fig. 40**: eine schematische Darstellung eines künstlichen Schließmuskelsystems im kontinenten Zustand;
- **Fig. 41**: das Schließmuskelsystem der Figur 40 im Defäkationszustand.

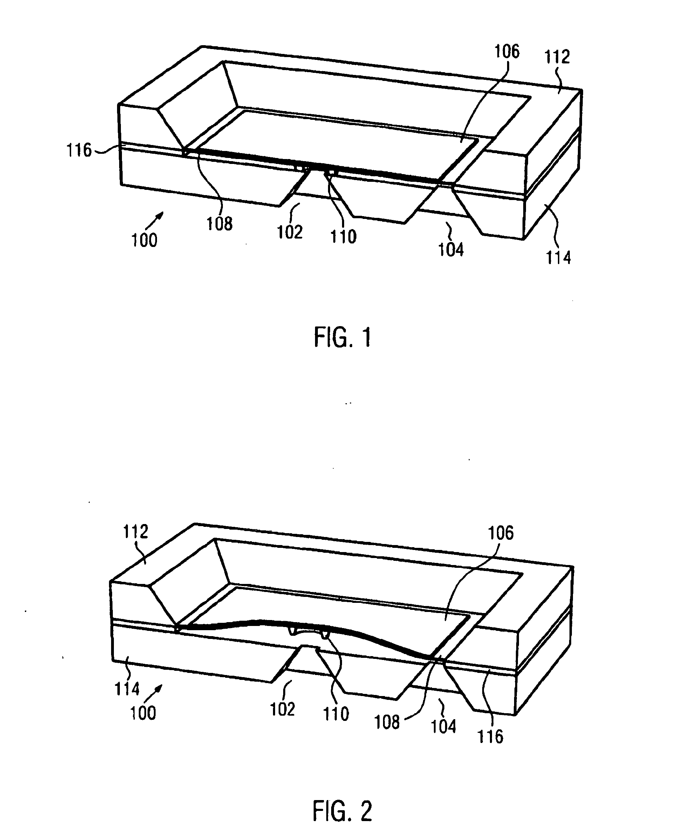

Figur 1 zeigt in einer geschnitten perspektivischen Ansicht ein erfindungsgemäßes Mikroventil 100 gemäß einer ersten vorteilhaften Ausführungsform. Das Mikroventil 100 weist eine erste Durchlassöffnung 102 und eine zweite Durchlassöffnung 104 auf, durch welche ein Fluid (eine Flüssigkeit oder ein Gas) ein- bzw. ausströmen kann. Beispielhaft ist hier angenommen, dass der Durchlass 102 ein Einlass und der Durchlass 104 ein Auslass ist. Selbstverständlich können aber für die abzudichtenden Öffnungen auch andere Anordnungen gewählt werden. Das in Figur 1 gezeigte Mikroventil besitzt als Antriebsmechanismus eine Piezokeramik 106, die fest auf einer Membran 108 montiert, beispielsweise geklebt ist.

In der vorliegenden Ausführungsform handelt es sich bei der Membran um eine Siliziummembran 108. Die Membran kann jedoch auch durch andere Materialien gebildet sein. Es kann erforderlich sein eine leitfähige Beschichtung auf der der Aktorseite zugewandten Membranseite aufzubringen. Ebenso ist es möglich eine strukturierte Metallisierung auf der Membranseite aufzubringen, die es ermöglicht den Piezoaktor direkt und ohne Drahtbondverfahren über bekannte Fügeverfahren (Kleben, Bonden etc.) zu kontaktieren. Weiterhin ist es möglich, die der Membran zugewandte Aktorseite mit einer strukturierten Metallisierung zu versehen, um diese dann auf der Membran zu montieren. Durch Anlegen einer Spannung an die Piezokeramik 106 verbiegt sich die Membran, wie dies grundsätzlich bekannt ist, und kann dabei sowohl in eine Richtung auf die erste Durchlassöffnung 102 zu, wie auch von der Durchlassöffnung weg bewegt werden.

Erfindungsgemäß ist zum Abdichten der ersten Durchlassöffnung 102 eine Ventillippe 110 vorgesehen. In der gezeigten Ausführungsform ist die Ventillippe 110 an der Membran, die in einem ersten Substrat 112 ausgebildet ist, angebracht. Die Einlassöffnung 102 und die Auslassöffnung 104 sind in dem zweiten Substrat 114 ausgebildet. Die beiden Substrate sind in der ersten Ausführungsform mittels einer adhäsiven Bondschicht 116 von genau definierter Dicke fest miteinander verbunden.

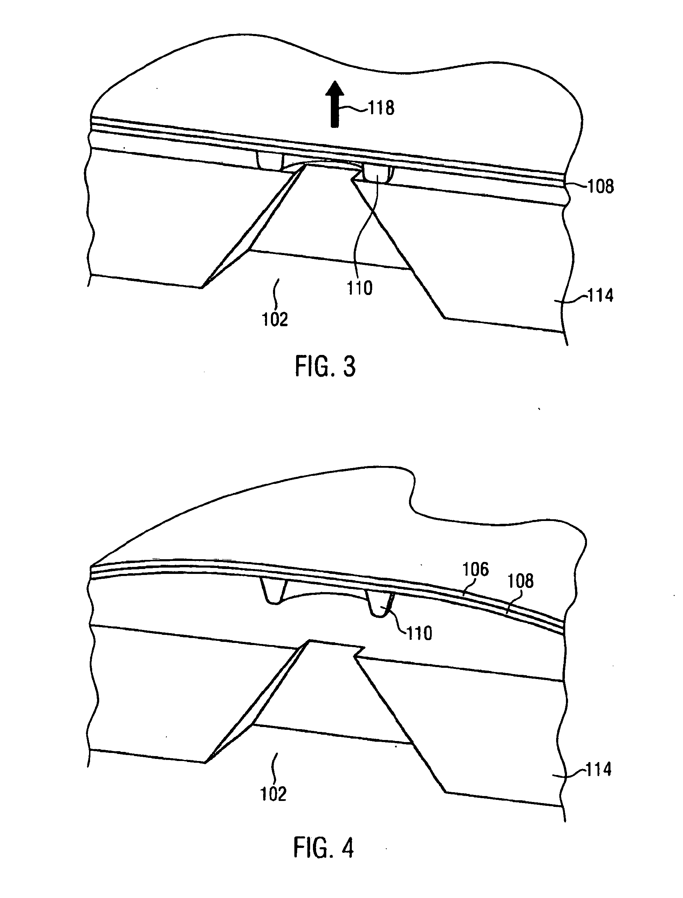

Wie aus den nachfolgenden Figuren 3 und 4 noch deutlicher wird, ist die Ventillippe 110 aus einem elastisch verformbaren Material gebildet und ist in dem in Figur 1 gezeigten geschlossenen Zustand des Ventils 100 verformt. Durch diese elastische Verformung im geschlossenen Zustand kann eine besonders sichere und dichte geschlossene Stellung des Ventils 100 erreicht werden. Bei der hier gezeigten Ausführungsform handelt es sich um ein normal-geschlossenes Ventil, d.h. die in Figur 1 gezeigte geschlossene Position ist die Ruheposition, welche die Membran 108 einnimmt, wenn die Piezokeramik 106 nicht mit einer elektrischen Spannung beaufschlagt wird. Der Vorteil eines solchen normal-geschlossenen Ventils besteht vor allem darin, dass keine Energie zum Aufrechterhalten des geschlossenen Zustands aufgewendet werden muss.

In Figur 3 und 4 ist der Bereich um Einlassöffnung 102 vergrößert dargestellt. Die erfindungsgemäße Ventillippe 110 hat eine ringförmige Gestalt und umschließt in der gezeigten Ausführungsform umlaufend die hier rechteckförmige Einlassöffnung 102. Im geschlossenen Zustand (in Figur 3 gezeigt) ist die Ventillippe 110 um einen Dickenbetrag zusammengedrückt, der sich über die Dicke der Bondschicht 116 (dargestellt in Figur 1) und die Höhe der Dichtstruktur 110 einstellen lässt. Beim Fügen des ersten und zweiten Substrats 112, 114, wird entsprechend der Dicke der Bondschicht 116 eine Stauchung des Dichtungsrings 110 hervorgerufen und somit der normal-geschlossene Charakter des Ventils 100 erreicht.

Wird die Membran 108 durch ein anliegendes elektrisches Feld an dem Piezoaktor 106 in Richtung 118 ausgelenkt, entspannt sich das Material der Dichtlippe zunächst. Bei genügend hoher Membranauslenkung entsteht schließlich zwischen Dichtlippe und gegenüberliegendem Substrat ein Spalt, durch den das Fluid fließen kann (s. Figur 4). Nach dem Beenden der Aktuierung kehrt die Membran 108 in ihre unaktuierte Position zurück und der Dichtungsring 110 wird erneut gestaucht und somit der Einlass 102 gegen den Auslass 104 abgedichtet. Erfindungsgemäß dämpft die weiche Ventillippe 110 den Aufprall und eine allmähliche Schädigung der Kontaktpartner wird insbesondere im dynamischen Betrieb vermieden. Je größer die Verformung im unaktuierten Zustand ist, desto größer ist auch der Leckdruck am Einlass und damit die zu erreichende Dichtigkeit. Andererseits kann mit geringeren Stauchungen eine höhere Durchflussrate im geöffneten Betrieb erreicht werden.

Zahlreiche experimentelle Untersuchungen und Computersimulationen haben gezeigt, dass die exakte Struktur der Dichtlippe 110 (in der gezeigten Ausführungsform eine ringförmige Struktur mit trapezförmigem Querschnitt) von entscheidender Bedeutung für die Strömungseigenschaften im geöffneten Zustand und die Dichtfähigkeit im geschlossenen Zustand ist. Erfindungsgemäß wird die Ventillippe durch einen planartechnischen Herstellungsprozess unter Verwendung eines photostrukturierbaren Silikons auf dem ersten Substrat 112 hergestellt.

Beispielsweise kann als Material für die Dichtlippe ein photostrukturierbares Silikon der Firma Dow Corning, WL-5150, verwendet werden. Dieses Material kann zur Herstellung von 15 bis 40 µm dünnen Schichten oder entsprechenden freistehenden Strukturen mit Aspektverhältnissen von bis zu 1,3 verwendet werden; Strukturbreiten von ≥ 15 µm sind dabei möglich. Die Viskosität des Ausgangsmaterials, das sich wie ein Negativphotolack verhält, beträgt 450 cPa. Das Elastizitätsmodul des prozessierten Silikons beträgt 160 MPa, die Eigenspannung auf Siliziumscheiben 2,6 MPa und die Zugfestigkeit 6 MPa. Die Dehnbarkeit wird mit 37,6% angegeben. Aus Nanoindentationsversuchen geht eine Nanoindentationshärte von 9,5 MPa und ein Nanoindentationsmodul von 300 MPa hervor. Eine thermische Stabilität bis zu 300ºC ist nachgewiesen. Der thermische Ausdehnungskoeffizient beträgt 236·10⁻⁶1/K. Die Feuchteabsorption beträgt gemessen mit dem Pressure Cooker Test 0,24%. Diese Daten sind vom Hersteller in Dow Corning: "Dow Corning WL-5150 photo definable spin on silicone notes", notes, 2006 bzw. Dow Corning: "information about Dow Corning brand low stress patternable silicone materials", data sheet 2003, bekannt.

Wie bereits erwähnt, kann aber auch ein anderes Polymerverwendet werden, das ein E-Modul von höchstens 500 MPa im endgültig prozessierten Zustand aufweist.

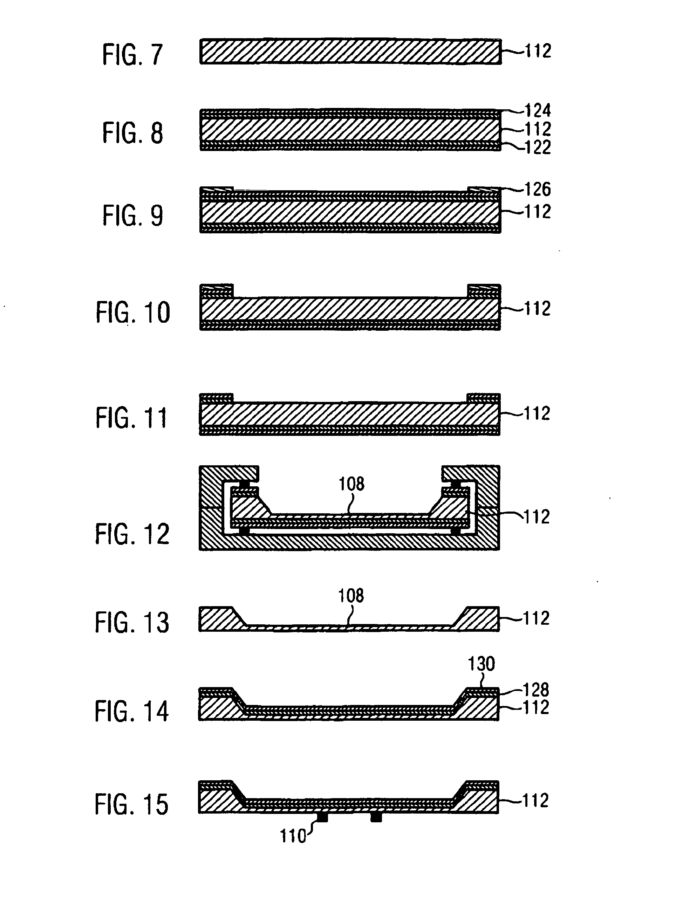

Das Material wird, wie nachfolgend mit Bezug auf die Figuren 7 bis 27 noch im Detail erläutert werden wird, mit einem Standardphotolithographieprozess auf der Membraninnenfläche ausgebildet. Diese Anordnung hat den Vorteil, dass der Wafer, der das erste Substrat 112 beinhaltet, an dieser Oberfläche vollkommen plan ist und deshalb auf besonders einfache Weise durch Aufschleudern mit dem Silikon beschichtet werden kann. Selbstverständlich kann aber auch vorgesehen sein, die Dichtlippe 110 auf dem zweiten Substrat 114 auszubilden. Weiterhin können auch sowohl am ersten Substrat 112 wie auch an dem zweiten Substrat 114 Dichtstrukturen angeordnet sein, die zusammenwirken, um im geschlossenen Zustand die erforderliche Abdichtung zu erreichen.

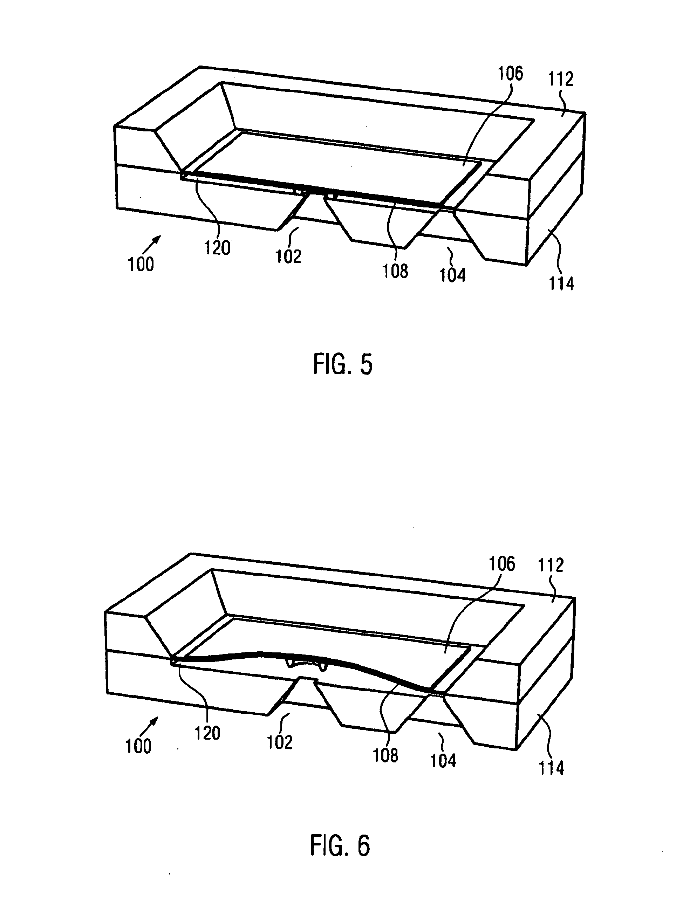

Eine alternative Herstellungsweise des erfindungsgemäßen Mikroventils 100 wird nachfolgend mit Bezug auf die Figuren 5 und 6 erläutert. Dabei besteht der wesentliche Unterschied zu der bisher erläuterten ersten Ausführungsform darin, dass die Substrate 112, 114 ohne zusätzliche adhäsive Bondschicht 116 mittels eines Direktbondverfahrens zusammengefügt werden. Beim Siliziumdirektbonden werden, wie dies an sich bekannt ist, die Siliziumsubstrate zunächst entweder thermisch oxidiert oder sie besitzen bereits eine natürliche Oxidschicht, die durch eine Oberflächenbehandlung hydrophilisiert wird. Die Oberflächen der zu verbindenden Wafer werden durch lediglich ein bis zwei Wassermoleküle umfassende Wasserschichten benetzt und miteinander in Kontakt gebracht. Die attraktive Wechselwirkung zwischen den beiden Substraten nach diesem Schritt beruht auf der Ausbildung von Wasserstoffbrückenbindungen, die aber zunächst noch schwach sind. Durch Tempern der Anordnung oder durch verschiedene chemisch physikalische Modifikationen des Prozesses kann die Bondfestigkeit die gewünschten Werte erreichen. Alternativ können auch Verfahren wie das eutektische Bonden oder das anodische Bonden eingesetzt werden, wenn entsprechend eines der beiden Substrate metallisiert wird, bzw. aus einem Glas besteht. Bei allen Bondverfahren ist auf ein geeignetes Temperaturbudget zu achten, da das elastische Material in der Regel bei hohen Temperatur zerstört wird.

Bei allen Fügeverfahren, die ohne nennenswert dicke Zwischenschichten 116 auskommen, wird erfindungsgemäß eine Ätzgrube 120 in dem zweiten Substrat 114 vorgesehen. Mittels der Ätzgrubentiefe und der Höhe der elastischen Dichtstruktur kann dann der Grad der Verformung der Ventillippe 110 im normal-geschlossenen Zustand eingestellt werden. Beispielsweise kann eine solche Ätzgrube durch reaktives Ionenätzen hergestellt werden.

Für einen Fachmann ist darüber hinaus klar, dass die Einstellung der Verformung der Ventillippe 110 auch durch eine Kombination aus Bondzwischenschichtdicke und einer Ätzgrube festgelegt werden kann.

Mit Bezug auf die Figuren 7 bis 27 soll nachfolgend die Herstellung einer erfindungsgemäßen Ventilanordnung im Detail erläutert werden. Dabei wird von einer Herstellung des Ventils 100 aus zwei Siliziumsubstraten ausgegangen. Selbstverständlich können aber entsprechend dem allgemeinen Fachwissen auch andere Materialien eingesetzt werden. Dabei wird auf dem ersten Substrat eine Membran durch KOH-Ätzung erzeugt und die spätere Außenseite dieses Substrats wird, um eine elektrische Kontaktierung der Aktoren zu ermöglichen, nacheinander mit Chrom und Gold bedampft. Auf der späteren Innenseite des ersten Substrats werden erfindungsgemäß ringförmige Ventillippen aus dem photostrukturierbaren Silikon Dow Corning WL-5150 hergestellt.

In dem zweiten Substrat werden ebenfalls mittels einer KOH-Ätzung Durchgangslöcher strukturiert, die als Ein- und Auslässe der Ventile dienen. Anschließend wird ein Trockenphotoresist (z.B. Ordyl SY300 von Elga Europe oder SU8) auf der Oberseite dieses Substrats auflaminiert und photolithographisch strukturiert. Die beiden Substrate - immer noch in Waferform - werden nunmehr in Kontakt gebracht und unter Druck gefügt. Nach dem Vereinzeln der Ventile werden diese mit Piezoaktoren bestückt. Hier kann beispielsweise ein elektrisch leitfähiges Epoxidsystem verwendet werden. Schließlich werden die Ventile mittels Drahtanschlüssen elektrisch kontaktiert.

Figur 7 zeigt das Ausgangssubstrat für das erste Substrat 112. Dabei werden beispielsweise n-Siliziumwafer mit einer (100)-Orientierung verwendet. Die Wafer haben beispielsweise einen Durchmesser von 100 mm und eine Dicke von 525 µm und sind doppelseitig poliert. Figur 8 zeigt das erste Substrat 112 nach dem Aufwachsen von 300 nm Feuchtoxid bei 950ºC und dem Abscheiden von 100 nm LPCVD (low pressure chemical vapour deposition) Siliziumnitrid bei 760ºC. Die Siliziumdioxidschicht ist mit dem Bezugszeichen 122, die Siliziumnitridschicht mit dem Bezugszeichen 124 versehen. In einem nächsten Schritt, der in Figur 9 illustriert ist, wird ein Photolack 126 aufgebracht und strukturiert. Mit Hilfe der Photolackschicht werden die Nitridschicht und die Siliziumdioxidschicht mittels eines Trockenätzschritts (Figur 10) strukturiert und anschließend wird der Photolack nasschemisch entfernt (Figur 11). Figur 12 stellt schematisch das zeitkontrollierte Nassätzen des Substrats 112 in 30%iger Kaliumhydroxidlauge bei 60ºC dar. Durch diesen Prozessschritt wird die Membran 108 ausgebildet. Die maskierende Siliziumnitrid/Siliziumdioxidschicht 122, 124 wird anschließend, wie in Figur 13 gezeigt, mittels 10%iger Flussäure entfernt. Figur 14 zeigt das Substrat 112 nach einem Metallisierungsschritt, bei dem eine 20 nm dicke Chromschicht 128 und eine 200 nm dicke Goldschicht 130 aufgebracht werden.

Figur 15 zeigt die erfindungsgemäße photolithographische Strukturierung einer aufgeschleuderten Silikonschicht, um die Ventillippe 110 auf der dem Aktor gegenüberliegenden Seite der Membran 108 auszubilden. Dabei wird, wie dies grundsätzlich bekannt ist, zunächst das flüssige Vorläufermaterial aufgeschleudert, mittels eines Temperschritts getrocknet und anschließend belichtet. Das verwendete Silikonmaterial ist ein Negativphotolack, sodass die belichteten Gebiete quer vernetzen und später erhalten bleiben. Nach dem Belichten folgt ein weiterer Temperschritt und anschließend die Entfernung des unbelichteten Materials im Entwicklungsschritt. Ein Ausheizschritt schließt die Prozessierung ab, bei dem das Material nochmals um ca. 2% (Herstellerangabe) schrumpft.

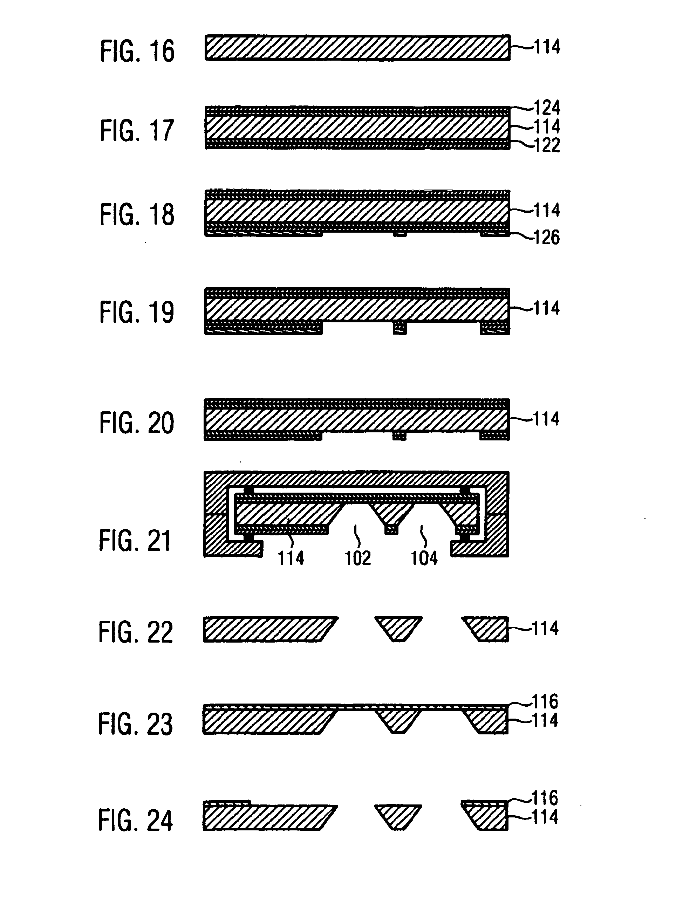

Zur Herstellung des zweiten Substrats 114 werden gemäß dem vorliegenden Ausführungsbeispiel wiederum n-Silizium (100) Scheiben mit einem Durchmesser von 100 mm und einer Dicke von 525 µm verwendet, die doppelseitig poliert sind. Analog zu der Herstellung des ersten Substrats werden die Siliziumdioxid- und Siliziumnitridmaskierungsschichten aufgebracht und mittels eines Photolacks 126 strukturiert. In dem in Figur 21 dargestellten zeitkontrollierten Nassätzschritt werden in dem zweiten Substrat 114 die Durchlassöffnungen 102 und 104 ausgebildet. Um die in Figur 1 und 2 gezeigte Variante mit adhäsiver Bondschicht 116 herzustellen, wird beispielsweise ein Trockenphotoresist auflaminiert, wobei beispielsweise eine Rollentemperatur von 100ºC und eine Laminiergeschwindigkeit von 0,9 cm pro Sekunde verwendet wird. Durch eine photolithographische Strukturierung wird der spätere Innenbereich des Ventils freigelegt.

Wie aus einem Vergleich der schematischen Dickenunterschiede zwischen dem Dichtlippenmaterial 110 und der Bondschicht 116 (s. Figur 15 und Figur 24) deutlich wird, lässt sich der Grad der Verformung der Dichtlippe 110 im nicht aktuierten Zustand durch diese Schichtdickendifferenz einstellen.

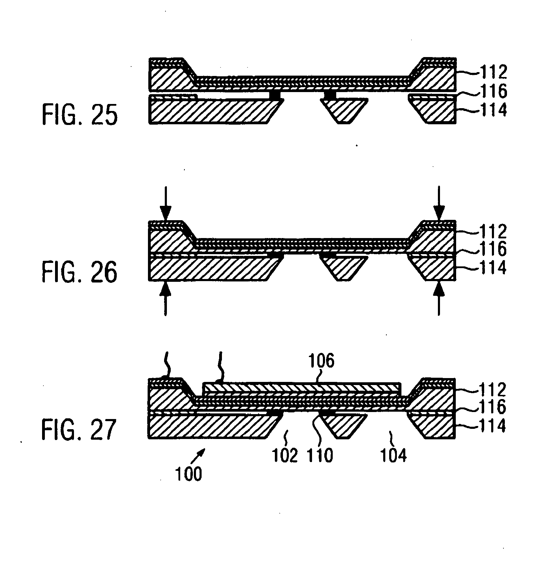

Die Figuren 25 bis 27 zeigen die Endmontage der Ventilstruktur. Dabei werden das erste und zweite Substrat 112, 114 zunächst in Bezug aufeinander justiert, sodass die Ventillippe 110 entsprechend über der Einlassöffnung 102 angeordnet ist. Durch Ausüben einer Bondkraft von beispielsweise 60 N/cm² und einer Bondtemperatur auf ca. 95 ºC werden die beiden Substrate gebondet und damit unlösbar miteinander verbunden. Figur 27 zeigt das vereinzelte Endprodukt, nachdem der Piezoaktor 106 mittels eines Leitklebers aufgeklebt und mit Drähten elektrisch kontaktiert wurde.

Für den Fall, dass eine Ätzgrube vorgesehen wird und die beiden Substrate ohne die Bondschicht 116 gefügt werden, wird nach dem Schritt der Figur 22 ein entsprechender Ätzschritt vorgenommen.

Abgesehen von diesen prozesstechnischen Verfahren, eine Vorspannung der Dichtlippe 110 im Ruhezustand über definierte Schichtdickenverhältnisse zu erzielen, besteht auch die Möglichkeit, das physikalische Prinzip einer mechanischen Hysterese der Membran 108 auszunutzen. Beispielsweise ist bekannt, dass piezolektrische Aktoren eine derartige Hysterese in ihrer Verformung aufweisen. Ebenso zeigt eine kompressiv vorgespannte Membran hysteretisches Verhalten, unabhängig von der Art der Aktuierung. Auf diese Weise lässt sich erreichen, dass durch entsprechende kurzzeitige Beaufschlagung des Piezoaktors mit einer elektrischen Spannung eine Restauslenkung der Membran 108 eingestellt wird, sodass die Ventillippe 110 auch nach Abschalten der Spannung in einem verformten Zustand verbleibt.

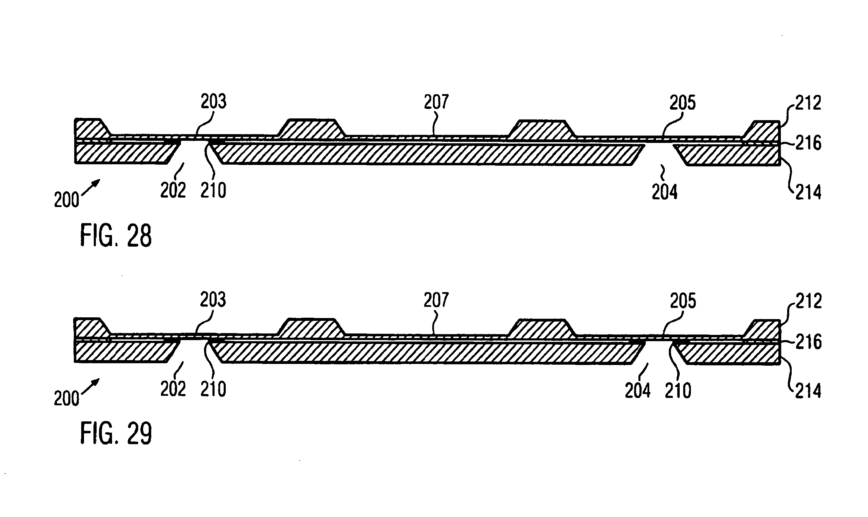

Die Figuren 28 und 29 zeigen beispielhaft zwei Mikropumpen, die unter Verwendung des erfindungsgemäßen Prinzips hergestellt wurden. Dabei handelt es sich um Dreikammerpumpen, die einen Einlass 202 mit einer ersten aktuierenden Membran 203 und einen Auslass 204 mit einer zweiten aktuierenden Membran 205 haben. Eine dritte auslenkbare Membran 207 dient der Volumenverdrängung, wie dies allgemein bekannt ist. Die erfindungsgemäße Ventillippe 210 kann dabei nur am Einlass 202 oder aber auch am Einlass und Auslass 202, 204 vorgesehen sein.

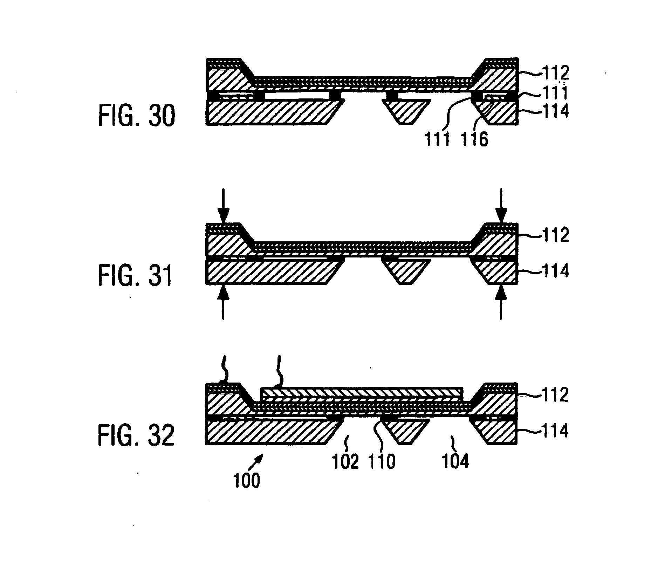

In den Figuren 30 bis 32 ist eine weitere vorteilhafte Ausführungsform der vorliegenden erfindungsgemäßen Ventilanordnung 100 gezeigt. Dabei ist zusätzlich zu der Ventillippe 110 eine weitere versiegelnde Dichtstruktur 111 vorgesehen, welche die Verbindung zwischen dem ersten und zweiten Substrat 112, 114 sowohl in Richtung auf die Ventilkammer wie auch zu den äußeren Randbereichen des Bauteils hin fluiddicht abschließt.

Auch die versiegelnde Dichtstruktur 111 kann so dimensioniert werden, dass sie bei dem Fügeschritt der Figur 31 komprimiert wird, um einen zuverlässigen Schutz vor eindringenden Fluiden zu gewährleisten. Durch eine solche elastische Dichtung 111 entsteht, wie in Figur 32 gezeigt, eine umlaufende, geschlossene Versiegelung, welche das Bondmaterial 116 vor chemischen und/oder biologischen Substanzen schützt. Dabei kommt das Fluid, welches das Ventil benetzt, lediglich mit Silizium und Silikon in Berührung. Dies ist insbesondere bei Verwendung eines Adhesivbondlayers von großer Bedeutung.

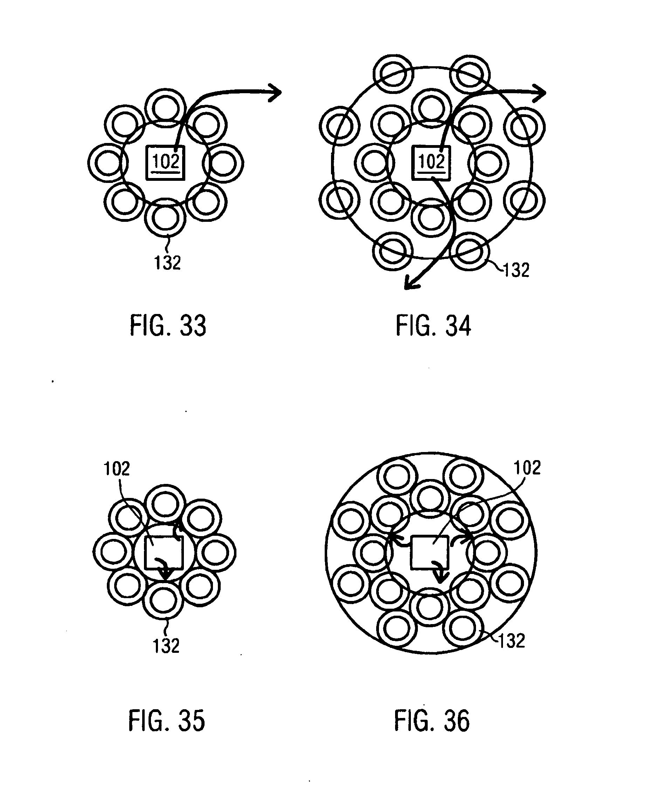

Die erfindungsgemäße Ausbildung einer Ventillippe beschränkt sich jedoch nicht nur auf einteilige ring- oder rahmenförmige Ventillippen 110, wie sie bisher gezeigt wurden. Alternativ können auch mehrteilige Geometrien verwendet werden. Die Gestaltung ist derart ausgeführt, dass bei vertikalem Druck auf die Dichtstruktur eine möglichst ausgeprägte laterale Verformung eintritt (siehe Figur 33). So können z.B. säulenförmige Ventillippenelemente 132, die hier einen wiederum ringförmigen Querschnitt aufweisen, um die Durchlassöffnung 102 angeordnet werden. Zwei Beispiele für eine solche mehrteilige Ausführungsform sind in den Figuren 33 und 34 im jeweils geöffneten Zustand gegeben. In dem geöffneten Zustand kann das Fluid 134 mit relativ geringem fluidischen Widerstand zwischen den Dichtelementen 132 hindurchströmen. Senkt sich jedoch die Membran und werden die Dichtelemente 132 verformt, kommen sie einander so nahe, dass dem Fluid der Durchgang versperrt ist. Dies ist in den Figuren 35 und 36 gezeigt. Dabei sind z.B. in Figur 36 eine Vielzahl derartiger Ventillippenelemente 132 versetzt angeordnet, sodass eine zuverlässige Abdichtung des Ventils im geschlossenen Zustand gesichert ist.

Wie mit Bezug auf die Figuren 37 bis 39 deutlich wird, müssen die Dichtelemente nicht nur auf einem Substrat angeordnet sein, sondern können ineinander verzahnt auch auf dem ersten und dem zweiten Substrat 112, 114 angeordnet sein. Insbesondere wenn man abgeschrägte Seitenwände vorsieht, wie dies in Figur 39 deutlich wird, kann eine besonders effiziente Abdichtung erreicht werden, ohne hierfür einen zu großen Hub der Membran zu benötigen. Eine weitere vorteilhafte Ausführung entsteht bei der Verwendung von mehrteiligen Säulenelementen, mit vorzugsweise lateraler Verformung, welche mit einem gewissen Abstand zueinander auf dem oberen und unteren Substrat positioniert werden können. Die Dichtwirkung entsteht durch laterales Fügen der oberen und unteren Säulenelemente unter Druckbelastung.

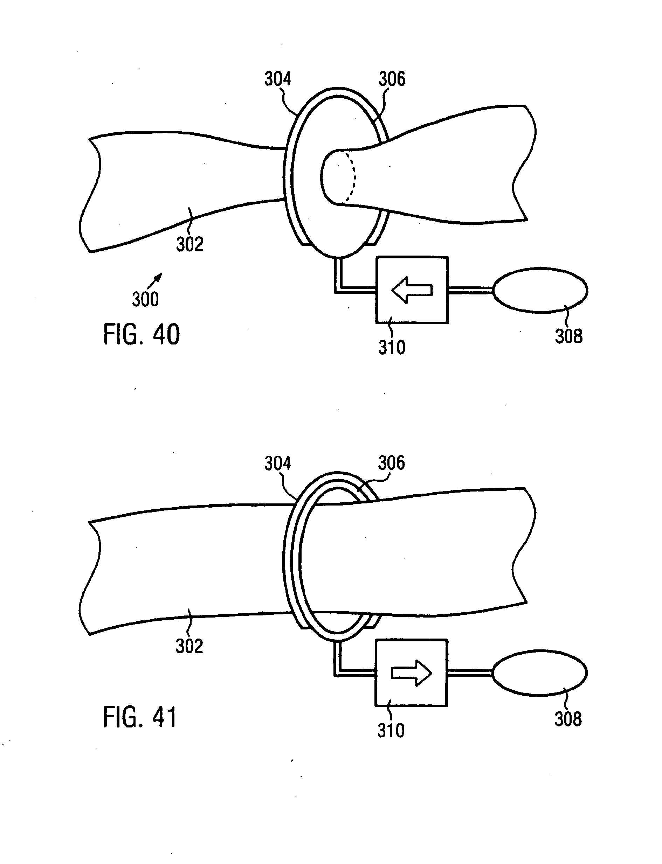

In Figur 40 und 41 schließlich ist ein vorteilhafter Anwendungsbereich für eine Mikropumpe gemäß der erfindungsgemäßen Prinzipien dargestellt. Ein künstliches Ringmuskelsystem 300 nach hydraulischem Prinzip, das z. B. zum Verschließen eines Enddarms 302 verwendet werden kann, umfasst einen auf einem Trägerring 304 angebrachten Kompressionsblähkörper 306 und ein Reservoir 308. Über die erfindungsgemäße Mikropumpe 310 ist der Kompressionsblähkörper 306 mit dem Reservoir 308 fluidisch verbunden. Der in Figur 40 gezeigte Zustand ist der sogenannte Kontinenzzustand, in dem der Großteil des Fluids sich in dem Kompressionsblähkörper befindet. Die erfindungsgemäße Anordnung erlaubt nun, dass ohne Aufwendung von Energie und mit großer Zuverlässigkeit ein Rückfluss des Fluids aus dem Kompressionsblähkörper 306 in das Reservoir 308 verhindert wird.

Durch entsprechende Ansteuerung der Pumpe 310 kann für eine Defäkation das Fluid in das Reservoir 308 gepumpt werden und nach Abschluss dieses Vorganges wieder zurück in den Kompressionsblähkörper 306.

Die erfindungsgemäße Pumpenstruktur hat für das künstliche Schließmuskelsystem 300 den Vorteil, dass nur für die Übergangsvorgänge zwischen dem in Figur 40 und Figur 41 gezeigten Zuständen Energie aufgewendet werden muss. Zum Beibehalten der jeweiligen Zustände wird keine Energiezufuhr benötigt und die Pumpe dichtet jeweils zuverlässig.

Durch Vermeiden hart/harter Kontakte zwischen beweglichen und stationären Elementen des erfindungsgemäßen Ventils kann außerdem die Langzeitstabilität der Anordnung signifikant erhöht werden.

Bei dem Herstellungsverfahren gemäß der vorliegenden Erfindung kann vorgesehen sein, dass in dem Schritt des Zusammenfügens des ersten und zweiten Substrats auf die Ventillippe mechanischer Druck in Richtung des Zusammenfügens ausgeübt wird, so dass die Ventillippe bei geschlossenem Ventil verformt ist, um ein normal-geschlossenes Mikroventil zu bilden. Vor dem Schritt des Zusammenfügens des ersten und zweiten Substrats kann außerdem auf mindestens einem der beiden Substrate eine Bondschicht aufgebracht werden, deren Schichtdicke zumindest teilweise einen Grad der Verformung der Ventillippe in der geschlossenen Position einstellt. Weiterhin kann vor dem Schritt des Zusammenfügens des ersten und zweiten Substrats an mindestens einem der beiden Substrate eine Vertiefung angebracht werden, deren Tiefe zumindest teilweise einen Grad der Verformung der Ventillippe in der geschlossenen Position einstellt.

Gemäß einer vorteilhaften Ausführungsform umfasst der Schritt des Aufbringens und Strukturierens der elastisch verformbaren Schicht das Aufschleudern und photolithographische Strukturieren einer Silikonschicht.

Vorteilhafterweise wird in dem Schritt des Ausbildens eines ersten und eines zweiten Substrates auf dem zweiten oder ersten Substrat eine Membran als Teil eines Aktorelements hergestellt. Gemäß einer vorteilhaften Ausführungsform wird die Membran vor der Inbetriebnahme des Mikroventils ausgelenkt, so dass die Ventillippe in einer Ruheposition des Aktorelements verformt ist, um ein normal-geschlossenes Mikroventil zu bilden. Zum Aktuieren der Membran wird beispielsweise ein piezoelektrischer Aktor aufgebracht. Dabei kann das Aktorelement einen piezoelektrischen oder elektromagnetischen Aktor mit hysteretischem Verhalten aufweisen.

## Patentansprüche

1. Verfahren zum Herstellen eines Mikroventils mit den folgenden Schritten:
Ausbilden eines ersten (112) und eines zweiten (114) Substrates;
Ausbilden mindestens einer ersten und einer zweiten Durchlassöffnung (102, 104) in dem zweiten und/oder ersten Substrat (112, 114);
Aufbringen und Strukturieren einer elastisch verformbaren Silikondichtstruktur (110, 111) durch Aufschleudern und fotolithographisches Strukturieren einer Silikonschicht auf dem ersten Substrat und/oder auf dem zweiten Substrat (112, 114) zum Ausbilden mindestens einer Ventillippe (110), wobei die Ventillippe so ausgebildet ist, dass sie die Durchlassöffnung (102, 104) umlaufend dichtend umschließt,
Zusammenfügen des ersten und zweiten Substrats (112, 114), so dass die mindestens eine Ventillippe (110) die mindestens eine erste und/oder zweite Durchlassöffnung (102, 104) in einer geschlossenen Position abdichtet und die Substrate eine steuerbare Fluid-Fließstrecke ausbilden.

2. Verfahren nach Anspruch 1, wobei die Dichtstruktur weiterhin eine versiegelnde Dichtstruktur (111) zum Versiegeln eines Verbindungsbereichs zwischen dem ersten Substrat (112) und dem zweiten Substrat (114) aufweist.

3. Verfahren nach Anspruch 2, wobei die versiegelnde Dichtstruktur (111) einteilig so ausgebildet wird, dass sie eine Ventilkammer umlaufend dichtend umschließt.

4. Verfahren nach Anspruch 2 oder 3, wobei die versiegelnde Dichtstruktur (111) einteilig so ausgebildet wird, dass sie einen äußeren Randbereich des Mikroventils umlaufend dichtend begrenzt.

5. Verfahren nach einem der vorangehenden Ansprüche, wobei die Ventillippe mehrteilig ausgebildet ist und eine Vielzahl säulenartiger, versetzt angeordneter Dichtelemente (132) aufweist, die im mechanisch unbelasteten Zustand Durchlasspfade mit geringem fluidischem Widerstand ausbilden und im mechanisch belasteten Zustand den Fluidpfad durch stark erhöhten fluidischen Widerstand versperren.

6. Verfahren nach Anspruch 5, wobei eine erste Anzahl der Dichtelemente (132) an dem ersten Substrat und eine zweite Anzahl der Dichtelemente (132) an dem zweiten Substrat angeordnet werden.

7. Verfahren nach einem der vorangehenden Ansprüche, wobei in dem Schritt des Zusammenfügens des ersten und zweiten Substrats auf die Ventillippe mechanischer Druck in Richtung des Zusammenfügens ausgeübt wird, so dass die Ventillippe bei geschlossenem Ventil verformt ist, um ein normal-geschlossenes Mikroventil zu bilden.

8. Verfahren nach Anspruch 7, wobei vor dem Schritt des Zusammenfügens des ersten und zweiten Substrats auf mindestens einem der beiden Substrate eine Bondschicht aufgebracht wird, deren Schichtdicke zumindest teilweise einen Grad der Verformung der Ventillippe in der geschlossenen Position einstellt.

9. Verfahren nach Anspruch 7 oder 8, wobei vor dem Schritt des Zusammenfügens des ersten und zweiten Substrats an mindestens einem der beiden Substrate eine Vertiefung angebracht wird, deren Tiefe zumindest teilweise einen Grad der Verformung der Ventillippe in der geschlossenen Position einstellt.

10. Verfahren nach einem der vorangehenden Ansprüche, wobei in dem Schritt des Ausbildens eines ersten und eines zweiten Substrates auf dem zweiten oder ersten Substrat eine Membran als Teil eines Aktorelements hergestellt wird.

11. Verfahren nach Anspruch 10, wobei die Membran vor der Inbetriebnahme des Mikroventils ausgelenkt wird, sodass die Ventillippe in einer Ruheposition des Aktorelements verformt ist, um ein normal-geschlossenes Mikroventil zu bilden.

12. Verfahren nach einem der Ansprüche 10 oder 11, weiterhin umfassend den Schritt:
Aufbringen eines piezoelektrischen Aktors zum Aktuieren der Membran.

13. Verfahren nach einem der Ansprüche 10 bis 12, wobei das Aktorelement einen piezoelektrischen oder elektromagnetischen Aktor mit hysteretischem Verhalten aufweist.

14. Mikroventil mit einem ersten Substrat (112) und einem zweiten Substrat (114), die miteinander unlösbar verbunden sind, um eine steuerbare Fluid-Fließstrecke auszubilden, und
mit mindestens einem ersten Durchlass (102) und mindestens einem zweiten Durchlass (104),
wobei das Mikroventil (100) zum Abdichten gegenüber einem Fluid mindestens eine Dichtstruktur (110, 111) aufweist,
**dadurch gekennzeichnet, dass** das Mikroventil nach einem Verfahren gemäß einem der Ansprüche 1 bis 13 hergestellt ist.

15. Mikropumpe mit mindestens einem Mikroventil (100) nach Anspruch 14.

16. Hydraulischer Muskel oder Schwellkörper mit einem Kompressionsblähkörper (306) und einem Reservoir (308), die fluidisch miteinander verbunden sind, wobei das Fluid zwischen dem Kompressionsblähkörper und dem Reservoir mittels einer Mikropumpe (200, 310) gemäß Anspruch 15 bewegbar ist.

## Claims

1. Method for fabricating a micro-valve, comprising the following steps:
forming a first (112) and a second (114) substrate;
forming at least one first and one second passage opening (102, 104) in said second and/or first substrate (112, 114);
applying and structuring an elastically deformable silicone seal structure (110, 111) by spinning on and photolithographically structuring a silicone layer on said first substrate and/or on said second substrate (112, 114) for forming at least one valve lip (110), wherein the valve lip is formed such that it circumferentially seals and encloses said passage opening (102, 104);
joining said first and second substrate (112, 114), so that said at least one valve lip (110) seals said at least one first and/or second passage opening (102, 104) in a closed position and the substrates form a controllable fluid path.

2. Method according to claim 1, wherein said seal structure further comprises a sealing seal structure (111) for sealing a connection region between said first substrate (112) and said second substrate (114).

3. Method according to claim 2, wherein said sealing seal structure (111) is formed as one piece such that it circumferentially seals and encloses a valve chamber.

4. Method according to claim 2 or 3, wherein said sealing seal structure (111) is formed as one piece such that it circumferentially seals and encloses an outer peripheral region of the micro-valve.

5. Method according to on e of the preceding claims, wherein said valve lip is designed in several parts and comprises a plurality of column-like sealing elements (132) being arranged in an off-set manner, which in the mechanically unloaded state form passage paths having low fluidic resistance and in the mechanically loaded state block said fluid path by means of greatly increased fluidic resistance.

6. Method according to claim 5, wherein a first number of said sealing elements (132) is disposed at said first substrate and a second number of the sealing elements (132) at said second substrate.

7. Method according to one of the preceding claims, where in the step of joining said first and second substrate, mechanical pressure is applied to said valve lip in the direction of joining, so that said valve lip is deformed when the valve is closed, in order to form a normal-closed micro-valve.

8. Method according to claim 7, wherein prior to the step of joining said first and second substrate, a bonding layer is applied to at least one of said two substrates, the layer thickness of which at least partially sets a degree of deformation of said valve lip in the closed position.

9. Method according to claim 7 or 8, wherein prior to the step of joining said first and second substrate, a recess is formed at least one of said two substrates, the depth of which at least partially sets a degree of deformation of said valve lip in the closed position.

10. Method according to one of the preceding claims, in the step of forming a first and a second substrate, a diaphragm is produced on said second or said first substrate as part of an actuator element.

11. Method according to claim 10, wherein said diaphragm is deflected prior to placing said micro-valve into operation, so that said valve lip is deformed when said actuator element is in a position at rest to form a normal-closed micro-valve.

12. Method according to at least one of the claims 10 or 11, further comprising the step of:
applying a piezoelectric actuator for actuating said diaphragm.

13. Method according to one of the claims 10 to 12, wherein said actuator element comprises a piezoelectric or electromagnetic actuator with hysteretic behavior.

14. Micro-valve having a first substrate (112) and a second substrate (114) which are non-detachably joined to each other in order to form a controllable fluid flow section, and
with at least one first passage (102) and at least one second passage (104),
wherein said micro-valve (100) comprises at least one elastically deformable seal structure (110, 111) for sealing against fluid,
**characterized in that** the micro-valve is fabricated using a method according to one of the claims 1 to 13.

15. Micro-pump comprising at least one micro-valve (100) according to claim 14.

16. Hydraulic muscle or spongy body having a compressible inflatable body (306) and a reservoir (308) being fluidically connected with each other, where the fluid between said compressible inflatable body and said reservoir is movable by means of a micro-pump (200, 310) according to claim 15.

## Revendications

1. Procédé de fabrication d'une micro-valve comprenant les étapes suivantes :
formation d'un premier (112) et d'un deuxième (114) substrat ;
formation d'au moins une première et d'une deuxième ouverture de passage (102, 104) dans le deuxième et/ou le premier substrat (112, 114) ;
application et structuration d'une structure d'étanchéité en silicone (110, 111) déformable élastiquement, par projection ou enduction centrifuge et structuration photo-lithographique d'une couche de silicone sur le premier substrat et/ou le deuxième substrat (112, 114) pour former au moins une lèvre de valve (110), la lèvre de valve étant réalisée de façon à entourer de manière étanche et périphérique l'ouverture de passage (102, 104),
assemblage du premier et du deuxième substrat (112, 114) de manière à ce que ladite au moins une lèvre de valve (110) assure l'étanchéité de ladite au moins une première et/ou deuxième ouverture de passage (102, 104), dans une position fermée, et les substrats formant ainsi un parcours d'écoulement de fluide pouvant être commandé.

2. Procédé selon la revendication 1, d'après lequel la structure d'étanchéité présente, par ailleurs, une structure d'étanchéité de scellage (111) pour sceller une zone de liaison entre le premier substrat (112) et le deuxième substrat (114).

3. Procédé selon la revendication 2, d'après lequel la structure d'étanchéité de scellage (111) est réalisée d'un seul tenant de manière à entourer de manière périphérique, étanche, une chambre de valve.

4. Procédé selon la revendication 2 ou la revendication 3, d'après lequel la structure d'étanchéité de scellage (111) est réalisée d'un seul tenant de façon à ce qu'elle délimite de manière périphérique, étanche, une zone de bordure extérieure de la micro-valve.

5. Procédé selon l'une des revendications précédentes, d'après lequel la lèvre de valve est réalisée en plusieurs parties et comprend un grand nombre d'éléments d'étanchéité colonnaires (132) agencés de manière mutuellement décalée, qui, dans l'état de non sollicitation mécanique, forment des chemins de passage à faible résistance fluidique, et dans l'état de sollicitation mécanique, obturent le chemin de fluide par une résistance fluidique fortement augmentée.

6. Procédé selon la revendication 5, d'après lequel on dispose un premier nombre des éléments d'étanchéité (132) sur le premier substrat, et un deuxième nombre des éléments d'étanchéité (132) sur le deuxième substrat.

7. Procédé selon l'une des revendications précédentes, d'après lequel dans l'étape de l'assemblage du premier et du deuxième substrat, une pression mécanique est exercée sur la lèvre de valve dans la direction de l'assemblage, de sorte que la lèvre d'étanchéité est déformée pour une valve fermée, pour former une micro-valve fermée en position normale.

8. Procédé selon la revendication 7, d'après lequel avant l'étape de l'assemblage du premier et du deuxième substrat, on applique sur au moins un des deux substrats, une couche d'adhésif de liaison dont l'épaisseur de couche règle au moins partiellement un degré de déformation de la lèvre de valve dans la position fermée.

9. Procédé selon la revendication 7 ou la revendication 8, d'après lequel avant l'étape de l'assemblage du premier et du deuxième substrat, on réalise sur au moins un des deux substrats, un creux dont la profondeur règle au moins partiellement un degré de déformation de la lèvre de valve dans la position fermée.

10. Procédé selon l'une des revendications précédentes, d'après lequel lors de l'étape de la formation d'un premier et d'un deuxième substrat, on réalise sur le deuxième ou le premier substrat, une membrane en tant que partie d'un élément d'actionneur.

11. Procédé selon la revendication 10, d'après lequel on dévie la membrane avant la mise en service de la micro-valve, de sorte que la lèvre de valve est déformée dans une position de repos de l'élément d'actionneur, pour former une micro-valve fermée en position normale.

12. Procédé selon l'une des revendications 10 ou 11, comprenant par ailleurs l'étape suivante :
application d'un actionneur piézoélectrique pour actionner la membrane.

13. Procédé selon l'une des revendications 10 à 12, d'après lequel l'élément d'actionneur est un actionneur piézoélectrique ou électromagnétique avec un comportement à phénomène d'hystérésis.

14. Micro-valve comprenant un premier substrat (112) et un deuxième substrat (114), qui sont reliés l'un à l'autre de manière inamovible, pour former un parcours d'écoulement de fluide qu'il est possible de commander, et
comprenant au moins un premier passage (102) et au moins un deuxième passage (104),
la micro-valve (100) présentant, pour assurer une étanchéité par rapport à un fluide, au moins une structure d'étanchéité (110, 111),
**caractérisée en ce que** la micro-valve est fabriquée selon l'une des revendications 1 à 13.

15. Micro-pompe comprenant au moins une micro-valve (100) selon la revendication 14.

16. Muscle hydraulique ou corps gonflant comprenant un corps gonflable de compression (306) et un réservoir (308), qui sont reliés mutuellement sur le plan fluidique, le fluide pouvant être déplacé entre le corps gonflable de compression et le réservoir, au moyen d'une micro-pompe (200, 310) selon la revendication 15.
